# EUROPEAN PATENT SPECIFICATION

(11) **EP 0 617 845 B1**
(45) Date of publication and mention of the grant of the patent: **07.02.1996**
(21) Application number: 93900059.2
(22) Date of filing: 21.12.1992
(51) Int. Cl.: H01M 4/50, H01M 4/62, H01M 6/04

(54) **CATHODES FOR ZINC MANGANESE DIOXIDE CELLS HAVING BARIUM ADDITIVES**
KATHODEN FUER ZINK-MANGANDIOXIDZELLEN MIT ZUSAETZEN VON BARIUM
CATHODES DESTINEES AUX CELLULES DIOXYDE DE MANGANESE-ZINC COMPORTANT DES ADDITIFS A BASE DE BARIUM

(30) Priority: 19.12.1991 HU 404791
(43) Date of publication of application: 05.10.1994
(73) Proprietor: BATTERY TECHNOLOGIES INC., Richmond Hill, Ontario L4B 1C3 (CA)
(72) Inventor: TAUCHER, Waltraud, A-8010 Graz (AT); KORDESCH, Karl, A-8010 Graz (AT); DANIEL-IVAD, Josef, Richmond Hill, Ontario L4C 9T9 (CA)
(74) Representative: Rackham, Anthony Charles
(86) International application number: CA9200553
(87) International publication number: WO9312551

(56) References cited:
- EP-A- 0 033 853
- EP-A- 0 110 344
- US-A- 4 384 029
- Patent Abstracts of Japan, Vol 9, No 53, E-301, abstract of JP 59-194356 (TOSHIBA DENCHI K.K.), 05.11.84

## Description

This invention relates to improvements relating to alkaline manganese dioxide-zinc cells and more particularly to a cathode structure for alkaline manganese dioxide-zinc cells with improved capacity, which comprises as solid components manganese dioxide active material, a conductive powder and an additive material. The solid components are uniformly mixed and pressed to form a porous body and the pores thereof are filled with electrolyte when the cathode structure is used in a cell.

Manganese dioxide is a widely used cathode material for alkaline primary batteries. Its rechargeability in alkaline solutions makes this material also attractive for rechargeable battery systems. Electrolytic manganese dioxide exhibits a limited rechargeability as disclosed by K. Kordesch *et al,* in Electochim. Acta, 26 1495 (1981) corresponding to the depth of discharge and this fact decreases the available capacity in practice.

The optimization of the cathode structure has long been the objective of various development activity. U.S. patent 4,384,029 issued to K. Kordesch *et al* deals with the properties of the manganese dioxide cathode material and with the composition of the cathode mix. The cathode structure is made of a mixture of electrolytic manganese dioxide powder as active material and graphite powder or colloidal graphite, and the mix is kept together either by a binding agent and/or by the application of pressure. The graphite has the task of improving conductivity. The addition of further materials like polymers or co-polymers of styrene, butadiene, acrylonitrile, urea, formaldehyde, vinyl alcohol, or epoxy resins was suggested. These materials called generally as "additives" had the purpose of improving the structure and of decreasing the swelling of the cathode material during cycling. A requirement generally imposed to such additives was that they had to be wettable by the electrolyte. Experience had shown that despite the presence of these additives in the cathode the cell voltage after a number of cycles decreased.

In U.S. patent 4,929,520 issued to K. kordesch *et al* the use of conducting washers was suggested between contacting blocks of the cathode body, whereby the internal resistance of the cell was decreased to a significant extent.

A further concern connected with the design of the cathode structure is the problem of hetaerolite formation which reduces the active manganese dioxide mass during the cycle life of the cell. This phenomenon has been discussed widely in the literature, a recent approach can be found in the paper of E. Preisler: Voltage Measurements on Alkaline Primary Cells During Discharge and Recovery (Progress in Batteries & Solar Cells. Vol. 9, 1990, IBA York Meeting pp 21-34). During the discharge the zincate concentration increases in the electrolyte by dissolution of the zinc electrode and zincate migrate to the cathode. The zinc ions penetrate to the active zone of the cathode and react with the reduced manganese oxide to form hetaerolite. During cycling the presence of hetaerolites has the following effects:
- it cannot participate any more in the cycling process, i.e. the amount of the active cathode mass is reduced (up to about 30% of all active material), whereby the cell capacity decreases;
- it expands mechanically and this tends to destroy the cathode structure.

To overcome the expansion tendency, means like perforated solid metal cages or increased amount of binding agents were used which further reduced the available space for active material and decreased conductivity.

The drawbacks of hetaerolite formation are not limited to rechargeable cells, similar drawbacks appear in primary cells, when they are discharged in intermittent time intervals.

It is the primary objective of the present invention to provide appropriate additive materials by which the above drawbacks can at least partially be eliminated.

According to the invention there is provided an alkaline manganese dioxide-zinc cell comprising a manganese dioxide cathode, a zinc anode, a separator between the anode and cathode, and an aqueous alkaline potassium hydroxide electrolyte, the cathode comprising, as solid components, a manganese dioxide material, a conductive powder and an additive material which is barium oxide, barium hydroxide and/or barium sulphate, the solid components having been uniformly mixed and pressed to form a porous body filled with the electrolyte, and the said barium compound constituting at least 3% of the total mass of the solid components of the cathode.

A further objective of the invention is the use of an additive.

In a cell according to the invention the cell voltage reduction is lessened during cycling of rechargeable alkaline manganese dioxide-zinc cells.

Preferably the said barium compound is added in 5% to 25% of the total mass of solid components.

In a preferable embodiment barium hydroxide is used as additive and includes 8 moles of water of crystallisation.

In the alkaline manganese dioxide-zinc cell, in the presence of potassium hydroxide electrolyte barium oxide tends to form barium hydroxide with the electrolyte.

The use of barium sulphate as additive material in about the same concentration as barium oxide or hydroxide provides similar advantages in cell performance, however, this choice is preferred, since barium sulphate is environmentally indifferent and commercially available at reasonable costs.

Measurements with these suggested additive materials have shown that the cell voltage during cycling, under any predetermined load, changes substantially less than that of cells without the additives.

The presence of barium compounds in the close vicinity of the active cathode material may reduce the access of zinc ions to the manganese dioxide, therefore, hetaerolite formation is substantially slowed down.

The suggested additive materials are all wettable by the electrolyte and their particle size is very small. This circumstance increases the utilization of the available manganese dioxide mass and reduces the internal cell resistance of cycled cells. These additive materials can be regarded therefore as efficient pore modifiers.

The beneficial effects of the presence of the suggested barium compounds as additive materials will be more apparent in view of test data collected from different kinds of alkaline manganese dioxide cells.

In the following examples the test and control cells have identical design and structure with the only different that control cells do not contain any barium compound as additive.

It will be apparent from the examples that the cell capacity per cycle and the cumulative capacity both increase rapidly when the amount of the additive material is about 3% of total mass. The performance does not improve further if the amount of the additive exceeds about 25% of total mass since in case of larger additive quantities the effect of decrease of the active mass becomes more dominant.

The invention will now be described in connection with preferable embodiments thereof, wherein reference will be made to the accompanying drawings. In the drawing:
Figure 1 shows a cross section of an alkaline manganese dioxide-zinc rechargeable cell;
Figures 2 and 3 show the discharge capacities and cumulative capacities of cells with cathodes comprising 0%, 10% and 15% of total mass barium sulphate;
Figures 4 and 5 are similar to Figures 2 and 3, they show discharge capacity and cumulative capacity curves for cells with 0%, 10% and 15% of total mass barium hydroxide with 9 molecular water;
Figures 6 and 7 show similar discharge capacity and cumulative capacity curves for cells with 0%, 10% and 15% of total mass barium oxide;
Figure 8 shows the cumulative capacity curves of tested and standard AA cells as a function of cycle number; and
Figures 9 and 10 show cell capacity versus cycle number curves for test and standard AA cells.

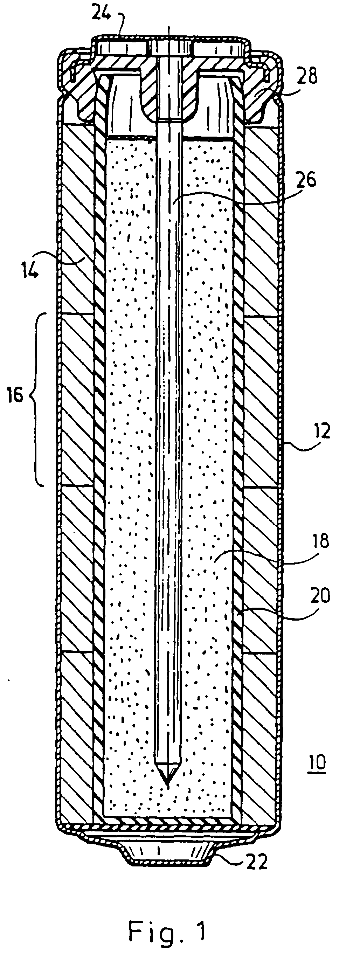

Figure 1 shows the cross-sectional elevation view of an alkaline manganese dioxide zinc rechargeable cell 10. The cell comprises the following main units: a steel can 12 defining a cylindrical inner space, a manganese dioxide cathode 14 formed by a plurality of hollow cylindrical pellets 16 pressed in the can, a zinc anode 18 made of an anode gel and arranged in the hollow interior of the cathode 14, and a cylindrical separator 20 separating the anode 18 from the cathode 14. The ionic conductivity between the anode and the cathode is provided by the presence of potassium hydroxide electrolyte added into the cell in a predetermined quantity.

The can 12 is closed at the bottom and it has a central circular tip 22 serving as positive terminal. The upper end of the can 12 is hermetically sealed by a cell closure assembly which comprises a negative cap 24 formed from a thin metal sheet, a current collector nail 26 attached to the negative cap 24 and penetrating deeply in the anode gel to provide electrical contact with the anode, and a plastic top 28 providing a sealing gasket between the negative cap 24 and the can 12, electrically insulating the negative cap 24 from the can 12 and separating gas spaces formed beyond the cathode and anode structures, respectively. For understanding the present invention there is no need for a more detailed structural description of the cell.

To demonstrate the effectivity of the present invention the impact of different barium compounds on the cell performance was tested.

The first test series was carried out with "C" type cells referred also to as LR-14 cells (IEEE standard designation). The cathodes 14 were formed from a mixture of manganese dioxide and graphite powder pressed to form the pellets 16 and the anode consisted of a zinc gel mixture. The measurements were carried out on respective test and standard cells which differed only in the composition of the cathode mixture. The cathodes of the test cells comprised the below specified barium compounds which replaced corresponding masses of manganese dioxide.

The test and standard cells were charged and discharged periodically by means of a computer controlled testing arrangement which provided for the accurate reading and storage of test data (corresponding data for the cell voltage, time and charge/discharge currents). All the cells were subjected to a testing program for about 40 days which included repetitive periods of charging with a constant 1.72 volt taper charger during 20 hours and of discharging with a 3.9 ohm load until the cell voltage dropped to 0.9 V. The current and voltage data were recorded every minute and the charge/discharge capacity was calculated automatically from the recorded data.

The product of the average discharge current and the discharge time in each cycle corresponds to the cell capacity for the cycle concerned. The cumulative capacity after a given cycle number is the sum of the capacities in all previous cycles.

Table 1 summarizes the cumulative capacity values for the standard and tested cell after 20 and 40 cycles.

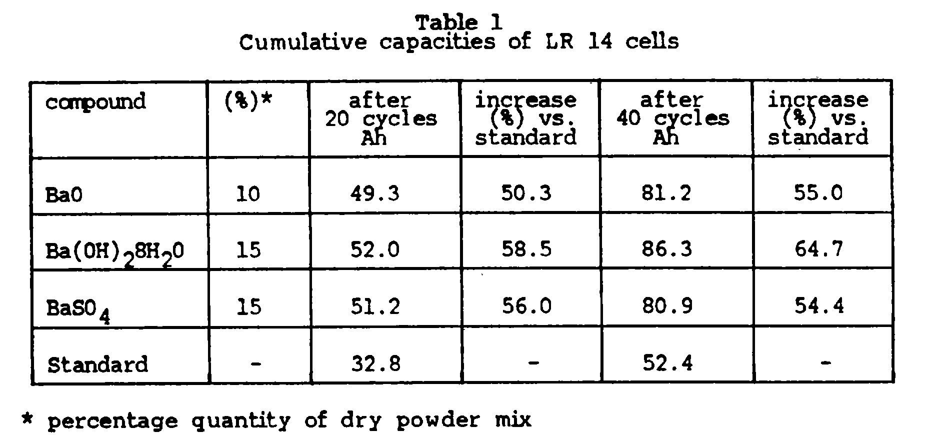

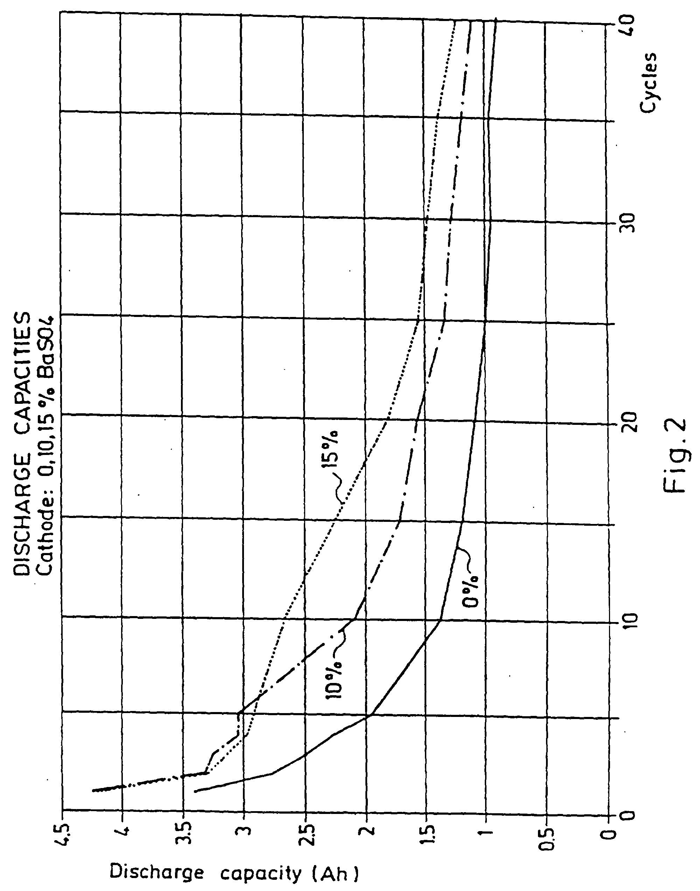

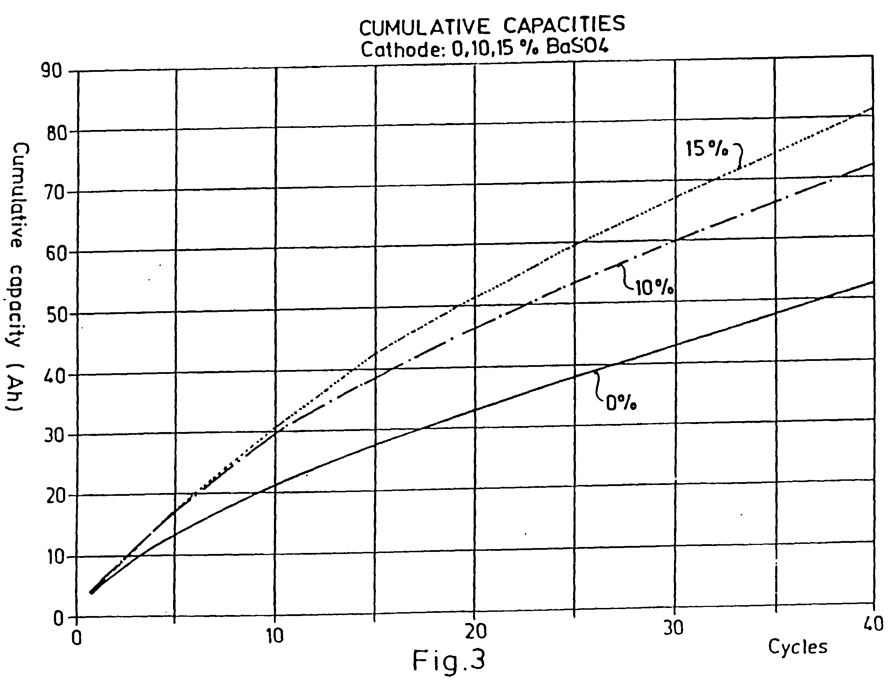

Figures 2 and 3 show the discharge capacities and cumulative capacities of cells with cathodes that have 0%, 10% and 15% mass barium sulphate in the dry powder mix. The 0% curves show the performance of a standard cell.

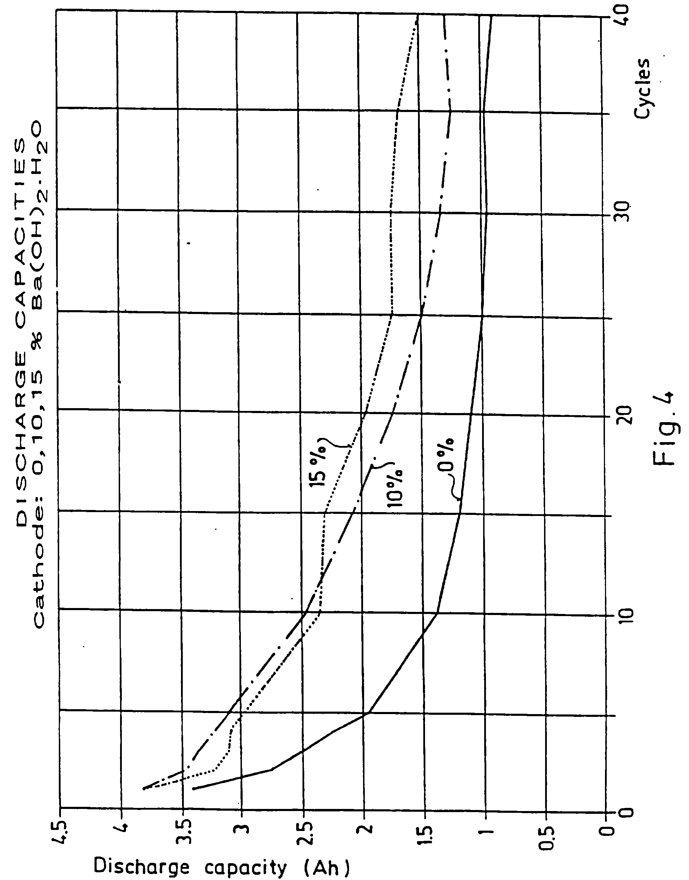

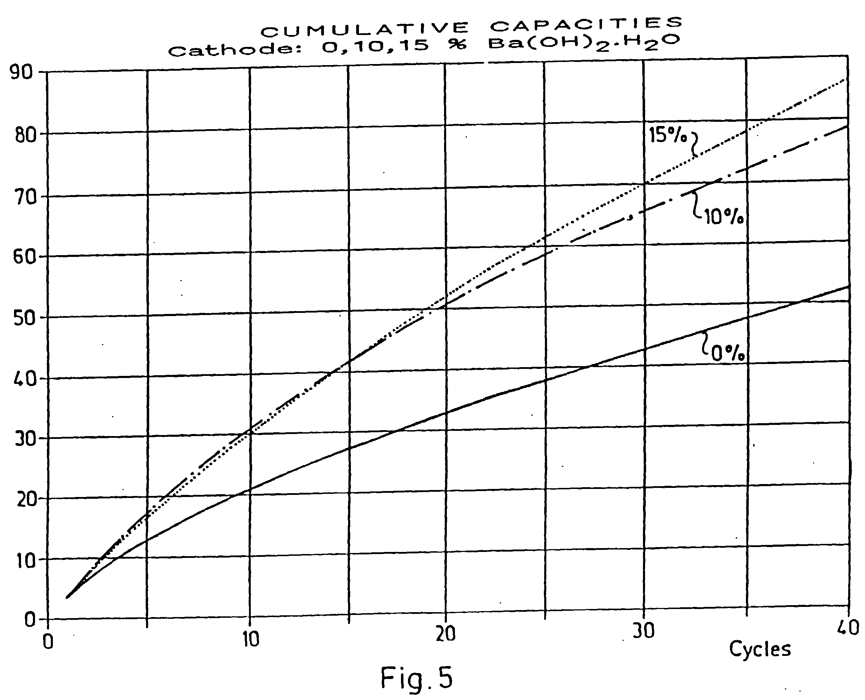

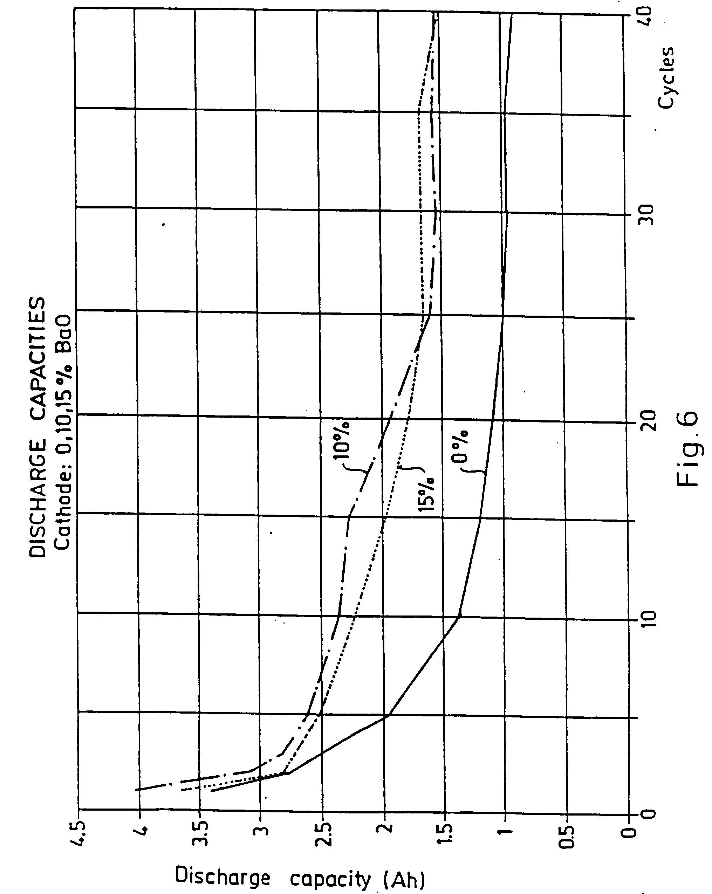

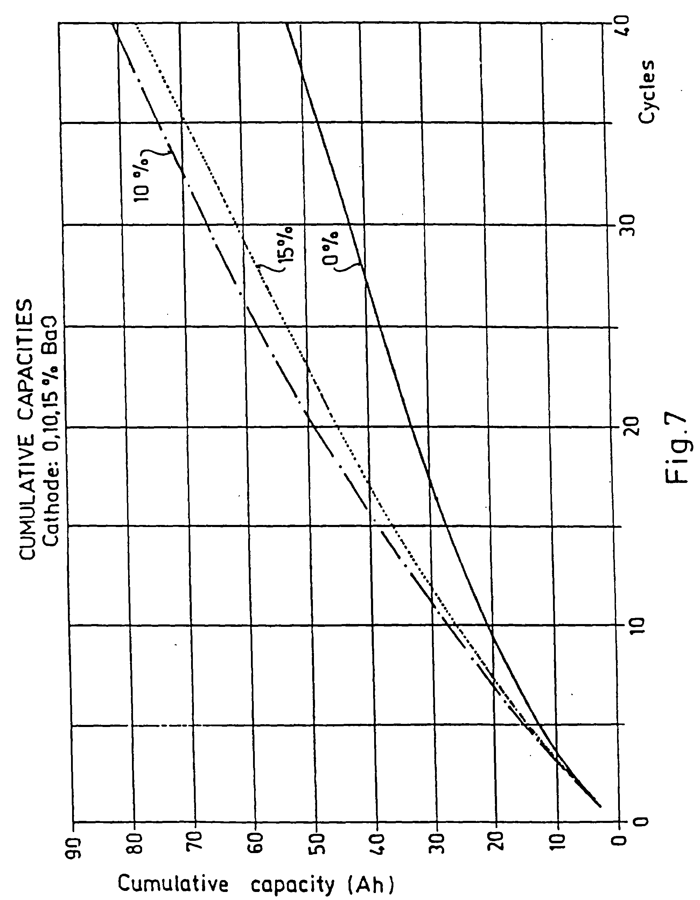

Figures 4 and 5 are similar to Figures 2 and 3, they show discharge capacity and cumulative capacity curves for cells with 0%, 10% and 15% of total mass barium hydroxide with 8 moles crystal water. Figures 6 and 7 show similar discharge capacity and cumulative capacity curves for further cells with 0%, 10% and 15% of total mass barium oxide. Here the barium oxide forms barium hydroxide with the water in the electrolyte.

This test series has demonstrated that in case of "C" size cells a quantity of 10% to 15% of total mass barium compound leads to substantial increase in cumulative capacity.

A further test series with a slightly different design of LR 14 "C" type cells was carried out, in which the dry mix of the cathode of the test cell comprised 7% mass barium sulphate and this constituted the only difference compared to the standard cell. The cumulative capacity results of this series are summarized in Table 2.

**Table 2**

| Cumulative capacity of LR 14 cells with 7% BaSO₄ versus standard cell | | | |
|---|---|---|---|
| cycle number | standard cell (Ah) | test cell (Ah) | increase (%) |
| 5 | 14.8 | 16.4 | 11.2 |
| 10 | 23.6 | 27.4 | 15.9 |
| 15 | 30.9 | 36.2 | 17.1 |
| 20 | 37.3 | 44.1 | 18.1 |
| 25 | 43.0 | 51.3 | 19.4 |
| 30 | 48.2 | 58.4 | 21.1 |
| 35 | 53.3 | 65.1 | 22.2 |
| 40 | 57.8 | 71.0 | 23.0 |

A further test series was made with rechargeable alkaline manganese dioxide cells of AA size (LR 6 size according to IEEE standard) to establish the optimum amount of barium salt addition and to demonstrate the cell behaviour under different load conditions.

The test and standard cells differed in the cathode composition, in the test cell 5%, 10% and 15% mass barium sulphate was added at the cost of manganese dioxide. The anodes comprised mercury free zinc anode gel. The preparation of the standard and test cells occurred the same day. 20 cells of each group were manufactured and respective 3 cells were tested with 4 and 10 ohm discharge load at room temperature. 30 cycles were performed under computer controlled cycling conditions (cut-off voltage 0.9 V, 15 hours charge to 1.72 V) and the average cumulative capacities were calculated.

Table 3 contains the percentual changes in the cumulative capacity values of test cells relative to that of standard cells.

**Table 3**

| LR 6 cells after 30 cycles | | |
|---|---|---|
| BaSO₄ (%) | load 4 ohm cum. capacity % | load 10 ohm cum. capacity % |
| 0 | 100 | 100 |
| 5 | 115 | 117 |
| 10 | 96 | 125 |
| 15 | 90 | 141 |

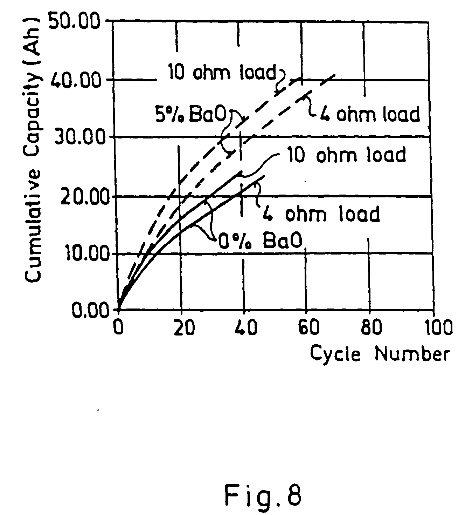

Figure 8 shows the cumulative capacity curves of the tested and the standard cells as a function of cycle number. The cells were loaded till a cut-off voltage of .9 V and charged with an 1.72 V charger through 15 hours. The ambient temperature was 22°C.

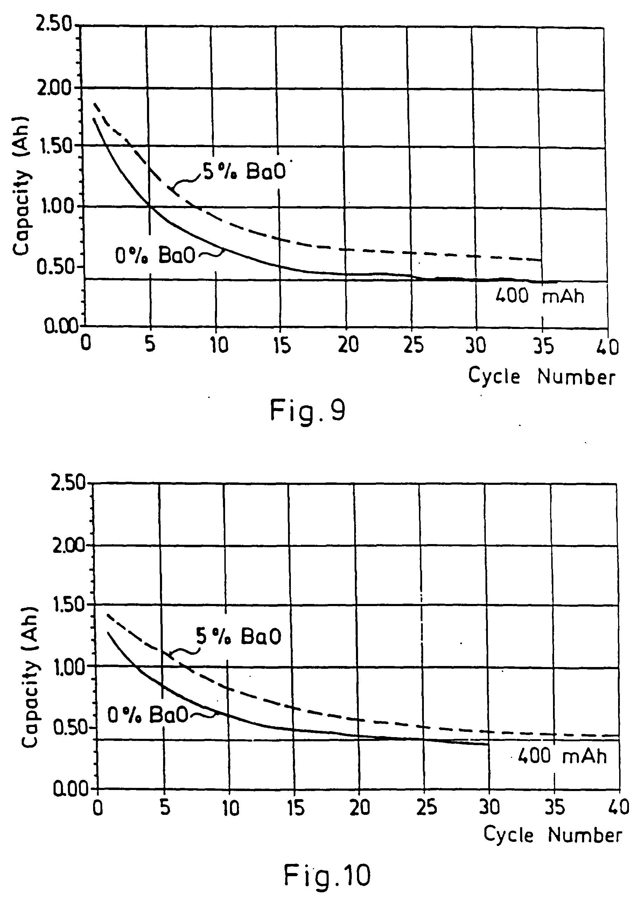

In case of other type test cells with 5% mass barium oxide in the cathode mix the cell capacity versus cycle number curves are shown in Figures 9 and 10. The test results with standard cells are also shown.

It can be seen from Table 3 and from Figures 8 to 10 both for LR 6 cells, that the presence of the barium compounds in the cathode brings about a larger improvement at medium and lower loads (i.e. if the load is 10 ohm than in case of high load represented by the 4 ohm).

In case of LR6 (AA size) cells the optimum percentage of barium salt is lower than in case of C size cells.

A further improvement caused by the presence of the barium sulphate and barium hydroxide lies in the increase of cycle life of the cell. For example conventional alkaline manganese dioxide LR 6 cells were tested on shallow cycling, and the standard cell gave on average 300 cycles, while the cells of similar design but comprising the barium compounds in the cathode gave on average more than 600 cycles.

From the point of view of manufacturing costs and environmental protection the use of barium sulphate is preferred. The barium sulphate is an inexpensive, commercially available powder, insoluble in water and is environmentally safe.

While the main advantages of the present invention appear in connection with rechargeable cells, the use of the suggested barium compounds in primary cells is also justifiable, since it reduces hetaerolite formation, thus increases the effective cell capacity. This increase becomes apparent mainly during intermittent use.

## Claims

1. An alkaline manganese dioxide-zinc cell comprising a manganese dioxide cathode, a zinc anode, a separator between the anode and cathode, and an aqueous alkaline potassium hydroxide electrolyte, the cathode comprising, as solid components, a manganese dioxide material, a conductive powder and an additive material which is barium oxide, barium hydroxide and/or barium sulphate, the solid components having been uniformly mixed and pressed to form a porous body filled with the electrolyte, and the said barium compound constituting at least 3% of the total mass of the solid components of the cathode.

2. The cell as claimed in Claim 1 in which the barium compound constitutes 3% to 25% of the total mass of the solid components.

3. A cell as claimed in Claim 1 or Claim 2 in which the additive is barium hydroxide which may include water of crystallisation.

4. A cell as claimed in Claim 3 in which the barium hydroxide comprises eight molecules of water of crystallisation.

5. A cell as claimed in Claim 1 or Claim 2 in which the barium compound is barium oxide.

6. A cell as claimed in Claim 5 in which at least a portion of the barium oxide forms barium hydroxide Ba(OH)₂ when mixed with the aqueous alkaline electrolyte.

7. A cell as claimed in Claim 1 or Claim 2 in which the barium compound is barium oxide forming barium hydroxide with the electrolyte.

8. A cell as claimed in Claim 1 or Claim 2 in which the barium compound is barium sulphate.

9. A cell as claimed in any preceding claim, in which the cell is a primary cell.

10. A cell as claimed in any one of claims 1 to 8 in which the cell is a rechargeable cell.

11. A cell as claimed in any one of the preceding claims in which the cell has a cylindrical design.

## Patentansprüche

1. Alkali-Mangandioxid-Zink-Zelle mit einer Mangandioxidkatode, einer Zinkanode, einem Trennelement zwischen Anode und Katode und einem wäßrigen alkalischen Kaliumhydroxid-Elektrolyt, wobei die Katode als feste Bestandteile ein Mangandioxidmaterial, ein leitendes Pulver und einen Zusatzstoff enthält, bei dem es sich um Bariumoxid, Bariumhydroxid und/oder Bariumsulfat handelt, die festen Bestandteile gleichmäßig miteinander gemischt und zu einem porösen Körper gepreßt sind, der mit dem Elektrolyt gefüllt ist, und die Bariumverbindung mindestens 3 % der Gesamtmasse der festen Bestandteile der Katode ausmacht.

2. Zelle nach Anspruch 1, wobei die Bariumverbindung 3-25 % der Gesamtmasse der festen Bestandteile ausmacht.

3. Zelle nach Anspruch 1 oder 2, wobei der Zusatzstoff Bariumhydroxid ist, das Kristallwasser enthalten kann.

4. Zelle nach Anspruch 3, wobei das Bariumhydroxid 8 Moleküle Kristallwasser enthält.

5. Zelle nach Anspruch 1 oder 2, wobei die Bariumverbindung Bariumoxid ist.

6. Zelle nach Anspruch 5, wobei wenigstens ein Teil des Bariumoxids Bariumhydroxid Ba(OH)₂ bildet, wenn es mit dem wäßrigen alkalischen Elektrolyt gemischt wird.

7. Zelle nach Anspruch 1 oder 2, wobei die Bariumverbindung Bariumoxid ist, das mit dem Elektrolyt Bariumhydroxid bildet.

8. Zelle nach Anspruch 1 oder 2, wobei die Bariumverbindung Bariumsulfat ist.

9. Zelle nach einem der vorhergehenden Ansprüche, wobei es sich um eine Primärzelle handelt.

10. Zelle nach einem der Ansprüche 1 bis 8, wobei es sich um eine aufladbare Zelle handelt.

11. Zelle nach einem der vorhergehenden Ansprüche, wobei die Zelle eine zylindrische Form besitzt.

## Revendications

1. Elément alcalin au dioxyde de manganèse-zinc comprenant une cathode en dioxyde de manganèse, une anode en zinc, un séparateur entre l'anode et la cathode et un électrolyte alcalin aqueux à base d'hydroxyde de potassium, la cathode comprenant, comme composants solides, un matériau à base de dioxyde de manganèse, une poudre conductrice et un matériau additif qui est l'oxyde de baryum, l'hydroxyde de baryum et/ou le sulfate de baryum, les composants solides ayant été uniformément mélangés et comprimés pour former un corps poreux rempli de l'électrolyte, ledit composé de baryum constituant au moins 3 % de la masse totale des composants solides de la cathode.

2. Elément selon la revendication 1, dans lequel le composé de baryum constitue 3 % à 25 % de la masse totale des composants solides.

3. Elément selon la revendication 1 ou la revendication 2, dans lequel l'additif est l'hydroxyde de baryum qui peut contenir de l'eau de cristallisation.

4. Elément selon la revendication 3, dans lequel l'hydroxyde de baryum comprend huit molécules d'eau de cristallisation.

5. Elément selon la revendication 1 ou la revendication 2, dans lequel le composé de baryum est l'oxyde de baryum.

6. Elément selon la revendication 5, dans lequel au moins une portion de l'oxyde de baryum forme de l'hydroxyde de baryum Ba(OH)₂ lorsqu'il est mélangé avec l'électrolyte alcalin aqueux.

7. Elément selon la revendication 1 ou la revendication 2, dans lequel le composé de baryum est l'oxyde de baryum formant l'hydroxyde de baryum avec l'électrolyte.

8. Elément selon la revendication 1 ou la revendication 2, dans lequel le composé de baryum est le sulfate de baryum.

9. Elément selon l'une des revendications précédentes, dans lequel l'élément est un élément primaire.

10. Elément selon l'une quelconque des revendications 1 à 8, dans lequel l'élément est un élément rechargeable.

11. Elément selon l'une quelconque des revendications précédentes, dans lequel l'élément a une forme cylindrique.
